(19) Europäisches Patentamt / European Patent Office / Office européen des brevets

(11) **EP 3 362 584 B1**

## (12) FASCICULE DE BREVET EUROPEEN

(45) Date de publication et mention de la délivrance du brevet:
**07.08.2019 Bulletin 2019/32**

(21) Numéro de dépôt: **16793958.6**

(22) Date de dépôt: **11.10.2016**

(51) Int Cl.:
**C22C 21/06** $^{(2006.01)}$   **C22F 1/047** $^{(2006.01)}$

(86) Numéro de dépôt international:
**PCT/FR2016/052621**

(87) Numéro de publication internationale:
**WO 2017/064407 (20.04.2017 Gazette 2017/16)**

### (54) TOLES MINCES EN ALLIAGE ALUMINIUM-MAGNESIUM-ZIRCONIUM POUR APPLICATIONS AEROSPATIALES

DÜNNE BLECHE AUS ALUMINIUM-MAGNESIUM-ZIRKONIUM-LEGIERUNGEN FÜR LUFT- UND RAUMFAHRTANWENDUNGEN

THIN SHEETS MADE FROM ALUMINIUM-MAGNESIUM-ZIRCONIUM ALLOYS FOR AEROSPACE APPLICATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2015 FR 1559786**

(43) Date de publication de la demande:
**22.08.2018 Bulletin 2018/34**

(73) Titulaire: **Constellium Issoire**
**63500 Issoire (FR)**

(72) Inventeurs:
- POUGET, Gaëlle
  **38100 Grenoble (FR)**
- EHRSTROM, Jean-Christophe
  **38000 Grenoble (FR)**
- SIGLI, Christophe
  **38000 Grenoble (FR)**

(74) Mandataire: **Constellium - Propriété Industrielle**
**C-TEC Constellium Technology Center**
**Propriété Industrielle**
**Parc Economique Centr'Alp**
**725, rue Aristide Bergès**
**CS10027**
**38341 Voreppe (FR)**

(56) Documents cités:
**US-A1- 2002 056 493     US-A1- 2012 291 925**
**US-B1- 6 551 424**

- ZHANG SIQI ET AL: "Mechanical properties and microstructures of Al-Mg-Li-Zr alloys-containing silver", TRANSACTIONS OF NONFERROUS METALS SOCIETY OF CHINA, NONFERROUS METALS SOCIETY OF CHINA, CN, vol. 4, no. 4, 1 décembre 1994 (1994-12-01), XP002664652, ISSN: 1003-6326
- FRIDLANDER I N ET AL: "Le développement d'un alliage 1424 Al.Li thernostable pour les applications dans les fuselages soudés", METALLOVEDENIE I TERMICHESKAYA OBRABOTKA METALLOV2003MASHINOSTROENIRU, GOSUDARSTVENNYJ NAUCNO-TECHNICESKIJ KOMITET SOVETA MINISTROV SSSR, RU, no. 1, 1 janvier 2002 (2002-01-01), pages 1-6, XP002664651, ISSN: 0026-0819

EP 3 362 584 B1

## Description

### Domaine de l'invention

L'invention concerne des produits corroyés en alliage d'aluminium et de magnésium (type Al-Mg, connu également sous le nom d'alliage d'aluminium de la série 5XXX selon l'Aluminium Association), plus particulièrement des produits en alliage Al-Mg-Zr présentant une résistance mécanique élevée et une bonne aptitude à la mise en forme. L'invention a également pour objet un procédé de fabrication ainsi que l'utilisation de ces produits destinés aux transports et en particulier à la construction aéronautique et spatiale.

### Etat de la technique

Des produits corroyés en alliage d'aluminium sont développés notamment pour produire des éléments de structure destinés à l'industrie du transport, en particulier à l'industrie aéronautique et à l'industrie spatiale. Pour ces industries, les performances des produits doivent sans cesse être améliorées et de nouveaux alliages sont développés pour présenter notamment une résistance mécanique élevée, une faible densité, une excellente résistance à la corrosion et une très bonne aptitude à la mise en forme. Une telle mise en forme complexe peut être réalisée à chaud, par exemple par fluage (creep forming).

Les alliages Al-Mg ont été intensivement étudiés dans l'industrie du transport, notamment du transport routier et maritime, en raison de leurs excellentes propriétés d'emploi telles que la soudabilité, la résistance à la corrosion et la formabilité, notamment dans les états peu écrouis tels que l'état O et l'état H111. La désignation de ces alliages suit les règles de The Aluminum Association, et celle des états métallurgiques est définie dans la norme européenne EN 515.

Ces alliages présentent cependant une résistance mécanique relativement faible pour l'industrie aéronautique et l'industrie spatiale.

Il existe donc un besoin pour des produits corroyés en alliage Al-Mg présentant une faible densité ainsi que des propriétés améliorées par rapport à celles des produits connus, en particulier en termes de résistance mécanique, résistance à la corrosion et aptitude à la mise en forme. De tels produits doivent de plus pouvoir être obtenus selon un procédé de fabrication fiable, économique et facilement adaptable à une ligne de fabrication conventionnelle.

US 2012/0291925 décrit des alliages AlMgLiZr pour l'usage aéronautique.

### Objet de l'invention

Un premier objet de l'invention est un produit corroyé en alliage d'aluminium de composition, en % en poids, Mg : 4,0-5,5 ; Li: 0,4- 0,7; Mn : 0,5-0,9 ; Zr : 0,08-0,15 ; Si : ≤ 0,2 ; Fe : ≤ 0,25 ; Zn : ≤ 0,4 ; Sc : ≤ 0,4 ; Ti : ≤ 0,15 ; Er, Yb, Gd, Y, Hf et/ou Nb : ≤ 0,2 ; autres éléments ≤ 0,05 chacun et ≤ 0,15 en association ; reste aluminium.

L'invention a également pour objet un procédé de fabrication dudit produit corroyé en alliage d'aluminium comprenant les étapes successives :

a) coulée d'une forme brute en alliage d'aluminium de composition, en % en poids, Mg : 4,0-5,5 ; Li: 0,4- 0,7; Mn : 0,5-0,9 ; Zr : 0,08-0,15 ; Si : ≤ 0,2 ; Fe : ≤ 0,25 ; Zn : ≤ 0,4 ; Sc : ≤ 0,4 ; Ti : ≤ 0,15 ; Er, Yb, Gd, Y, Hf et/ou Nb : ≤ 0,2 ; autres éléments ≤ 0,05 chacun et ≤ 0,15 en association ; reste aluminium ;
b) optionnellement, homogénéisation ;
c) déformation à chaud de la forme brute à une température de fin de déformation supérieure à 250°C, préférentiellement comprise entre 250 et 350°C ;
d) traitement thermique ou thermomécanique à une température comprise entre 250 et 350°C, préférentiellement entre 275 et 325°C.

L'invention a encore pour objet l'utilisation dudit produit corroyé pour réaliser des éléments de structure d'aéronefs en alliage d'aluminium selon l'invention, ayant subi un traitement thermique ou un traitement thermomécanique à une température comprise entre 250 et 350°C et ayant, à mi-épaisseur, pour une épaisseur de 0,5 à 30 mm, une microstructure essentiellement non-recristallisée.

### Description des figures

Figure 1 : Micrographie représentative d'une microstructure dite « non-recristallisée » (échantillon de l'alliage C observé après un traitement thermique de 1h à 300°C et une attaque de type oxydation anodique, plan LxTC à mi-épaisseur).

Figure 2 : Micrographie représentative d'une microstructure dite « partiellement recristallisée » (échantillon de l'alliage B observé après un traitement thermique de 1h à 300°C et une attaque de type oxydation anodique, plan LxTC à mi-épaisseur).

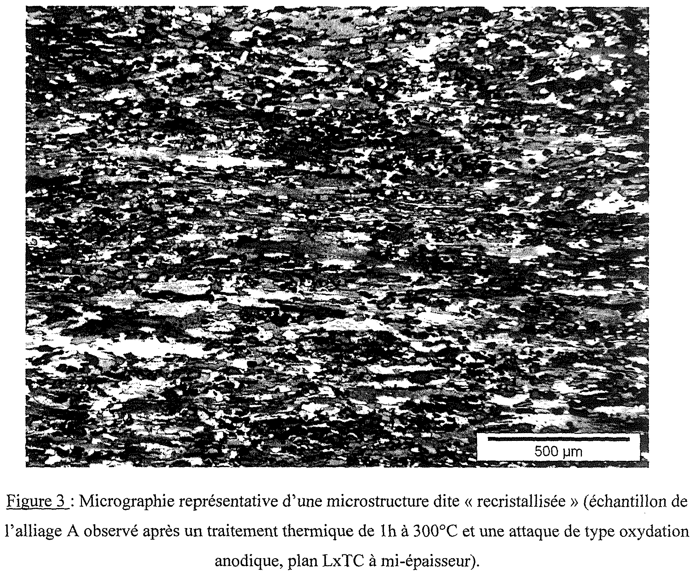

Figure 3 : Micrographie représentative d'une microstructure dite « recristallisée » (échantillon de l'alliage A observé après un traitement thermique de 1h à 300°C et une attaque de type oxydation anodique, plan LxTC à mi-épaisseur).

Figure 4 : Corrélation entre dureté Vickers $HV_{20}$ et limite d'élasticité $R_{p0.2}$

**Description de l'invention**

Sauf mention contraire, toutes les indications concernant la composition chimique des alliages sont exprimées comme un pourcentage en poids basé sur le poids total de l'alliage. A titre d'exemple, l'expression 1,4 Cu signifie que la teneur en cuivre exprimée en % en poids est multipliée par 1,4. La désignation des alliages se fait en conformité avec les règlements de « The Aluminium Association », connus de l'homme du métier.

La densité dépend de la composition et est déterminée par calcul plutôt que par une méthode de mesure de poids. Les valeurs sont calculées en conformité avec la procédure de « The Aluminium Association », qui est décrite pages 2-12 et 2-13 de « Aluminum Standards and Data ». Les définitions des états métallurgiques sont indiquées dans la norme européenne EN 515.

La microstructure (structure des grains dans le plan LxTC à mi-épaisseur, t/2) des échantillons est évaluée quantitativement pour la présente invention après une attaque métallographique de type oxydation anodique et sous lumière polarisée :

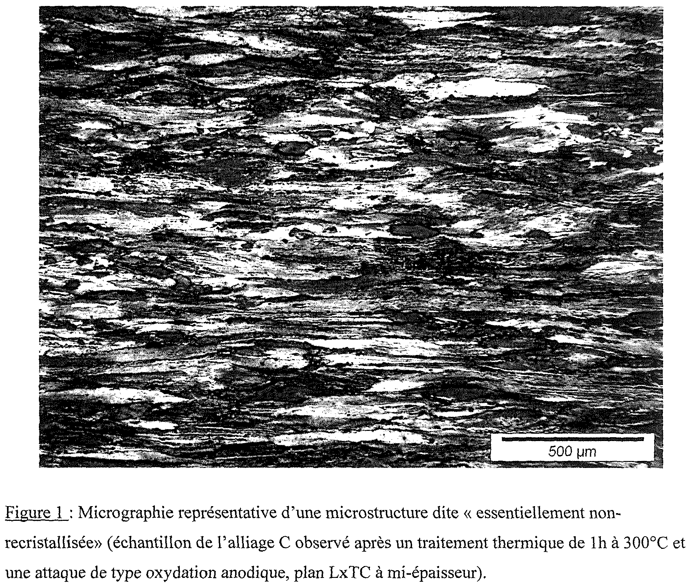

_ le terme « essentiellement non-recristallisé » est utilisé lorsque la structure granulaire ne présente pas ou peu de grains recristallisés, typiquement moins de 20%, préférentiellement moins de 15% et plus préférentiellement encore moins de 10% des grains sont recristallisés (la figure 1 est une micrographie représentative de cette microstructure dite « essentiellement non-recristallisée ») ;

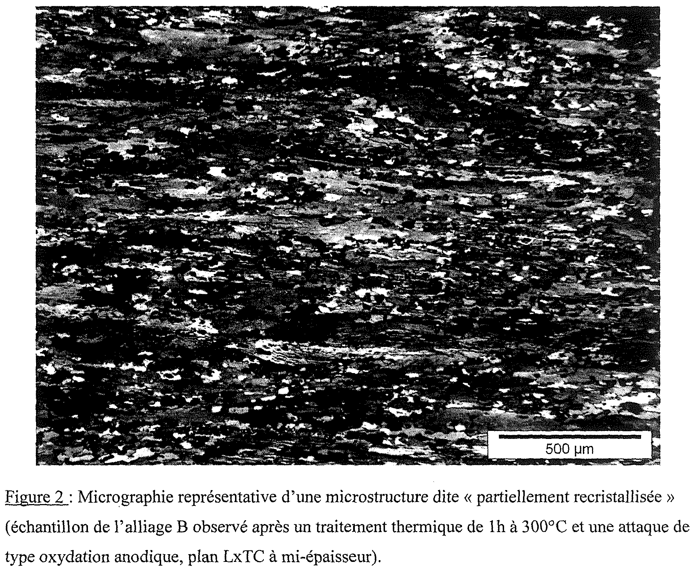

_ le terme « recristallisé » est utilisé lorsque la structure granulaire présente une proportion importante de grains recristallisés, typiquement plus de 50%, préférentiellement plus de 60% et plus préférentiellement encore plus de 80% des grains sont recristallisés (la figure 2 est une photographie représentative de cette microstructure dite « recristallisée ») ;

_ le terme « partiellement recristallisé » est utilisé lorsque la structure granulaire est intermédiaire entre les deux précédentes (la figure 1 est une photographie représentative de cette microstructure dite « partiellement recristallisée »).

La dureté Vickers est déterminée selon la norme NF EN ISO 6507-1 (mars 2006) dans le plan LxLT des échantillons et après usinage d'1/10eme de l'épaisseur de la tôle (charge de 20 kg). Il est connu que l'évolution des propriétés, et de la dureté en particulier, est un moyen d'évaluer le niveau de restauration / recristallisation d'un alliage d'aluminium (R. Develay . Traitements thermiques des alliages d'aluminium. Techniques de l'Ingénieur, 1986, vol. M1290, p.11 / G. E. Tooten, D. S. MacKenzie. Handbook of Aluminum - Volume 2 : Alloy production and materials manufacturing, 2005, p.202).

Le paramètre λ, représentant la perte de dureté associée à un traitement thermique, est défini comme suit :

$$\lambda = \frac{HV_{tel\,que\,déformé} - HV}{HV_{tel\,que\,déformé} - HV_{reX}}$$

avec $HV_{tel\,que\,déformé}$ : dureté initiale après déformation à chaud ;
$HV_{reX}$ : dureté correspondant à l'état recristallisé (ici après 1h à 400°C) ;
$HV$ : dureté de l'échantillon.

Il est typiquement admis qu'au-delà d'une perte de dureté de 40% ($\lambda > 0.4$), un alliage d'aluminium commence à recristalliser (R. Develay. Traitements thermiques des alliages d'aluminium. Techniques de l'Ingénieur, 1986, vol. M1290, p.11 / G. E. Tooten, D. S. MacKenzie. Handbook of Aluminum - Volume 2 : Alloy production and materials manufacturing, 2005, p.202).

Sauf mention contraire, les définitions de la norme EN 12258 s'appliquent.

Dans le cadre de la présente invention, on appelle « élément de structure » ou « élément structural » d'une construction mécanique une pièce mécanique pour laquelle les propriétés mécaniques statiques et/ou dynamiques sont particulièrement importantes pour la performance de la structure et pour laquelle un calcul de structure est habituellement prescrit ou réalisé. Il s'agit typiquement d'éléments dont la défaillance est susceptible de mettre en danger la sécurité de ladite construction, de ses utilisateurs, de ses usagers ou d'autrui. Pour un avion, ces éléments de structure comprennent notamment les éléments qui composent le fuselage (tels que la peau de fuselage, (fuselage skin en anglais), les raidisseurs ou lisses de fuselage (stringers), les cloisons étanches (bulkheads), les cadres de fuselage (circumferential frames), les ailes (tels que la peau de voilure extrados ou intrados (upper or lower wing skin), les raidisseurs (stringers ou stiffeners), les nervures (ribs), les longerons (spars), les profilés de plancher (floor beams) et les rails de sièges (seat tracks)) et l'empennage composé notamment de stabilisateurs horizontaux et verticaux (horizontal or vertical stabilisers), ainsi que les portes.

Le produit corroyé en alliage d'aluminium selon l'invention a la composition particulière, en % en poids, suivante : Mg : 4,0-5,5 ; Li: 0,4 - 0,7; Mn : 0,5-0,9 ; Zr : 0,08-0,15 ; Si : $\leq$ 0,2 ; Fe : $\leq$ 0,25 ; Zn : $\leq$ 0,4 ; Sc : $\leq$ 0,4 ; Ti : $\leq$ 0,15 ; Er, Yb, Gd, Y, Hf et/ou Nb : $\leq$ 0,2 ; autres éléments $\leq$ 0,05 chacun et $\leq$ 0,15 en association ; autres éléments $\leq$ 0,05 chacun et $\leq$ 0,15 en association ; reste aluminium. Un tel produit est en particulier apte à être soumis à un traitement thermique de désensibilisation à la corrosion et/ou apte à être mis en forme à chaud par traitement thermomécanique, en particulier par fluage, à une température comprise entre 250 et 350°C, préférentiellement entre 275 et 325°C, tout en conservant, à mi-épaisseur, pour une épaisseur de 0,5 à 20 mm, préférentiellement de 0,5 à 15 mm et, plus préférentiellement encore de 0,5 à 10 mm, une microstructure essentiellement non-recristallisée.

Selon un mode de réalisation avantageux, l'alliage d'aluminium dudit produit corroyé comprend de 4,4 à 5,3% en poids de Mg, préférentiellement de 4,8 à 5,2% en poids de Mg. D'excellents résultats ont été obtenus pour des alliages selon ce mode de réalisation notamment pour ce qui concerne les propriétés mécaniques statiques.

L'alliage d'aluminium comprend de 0,4 à 0,7% en poids de Li, préférentiellement de 0,4 à 0,6% en poids de Li. Les présents inventeurs ont constaté qu'une telle teneur en lithium permet, en présence de certains éléments d'addition formant des phases de structure cristallographiques L1$_2$ dont en particulier le zirconium, de conserver une microstructure essentiellement non-recristallisée lors d'un traitement thermique ou thermomécanique tel que précédemment décrit. Une telle teneur en Li permet d'améliorer très significativement les propriétés mécaniques statiques, en particulier la limite d'élasticité ($R_{p0,2}$) des produits corroyés selon l'invention. Dans un mode de réalisation préféré, la densité desdits produits corroyés selon l'invention est inférieure à 2,64, plus préférentiellement inférieure à 2,62.

Le produit corroyé en alliage d'aluminium selon l'invention comprend de 0,5 à 0,9% en poids de Mn, préférentiellement de 0,6 à 0,9% en poids de Mn. Une teneur en manganèse contrôlée contribue à l'amélioration des caractéristiques mécaniques statiques.

Le produit en alliage d'aluminium selon l'invention comprend de 0,08 à 0,15% en poids de Zr, préférentiellement de 0,11 à 0,15%. Les présents inventeurs pensent qu'une telle teneur en Zr, associée notamment à la teneur particulière de Li, permet la formation de dispersoïdes Al$_3$(Zr,Li) de structure cristallographique L1$_2$, conférant au produit selon l'invention une résistance à la recristallisation élevée, notamment lors d'un traitement thermique ou thermomécanique à une température comprise entre 250 et 350°C, préférentiellement entre 275 et 325°C. L'absence substantielle ou la faible quantité de lithium en solution solide dans l'alliage à l'issue du procédé de fabrication selon l'invention paraît donc une caractéristique essentielle à la résistance à la recristallisation précédemment décrite.

Le produit en alliage selon l'invention peut également comprendre une teneur de scandium inférieure ou égale à 0,4% en poids, préférentiellement de 0,15 à 0,3% en poids. Les présents inventeurs pensent que la présence de scandium dans une telle teneur limitée, en combinaison avec la présence de Zr et de Li, est susceptible d'amplifier la résistance à la recristallisation décrite ci-avant.

Le produit corroyé en alliage d'aluminium peut en outre comprendre du Fe dans une teneur, en % en poids, inférieure ou égale à 0,25%, préférentiellement inférieure ou égale à 0,1%, plus préférentiellement encore inférieure ou égale à 0,07%. Les présents inventeurs pensent qu'une teneur minimum en Fe, ainsi qu'éventuellement celle de Si, peut contribuer à améliorer les propriétés mécaniques et notamment les propriétés en fatigue de l'alliage. De même, l'alliage d'aluminium peut comprendre jusqu'à 0,2% en poids de Si, préférentiellement la teneur en Si est inférieure ou égale à 0,1% en poids, préférentiellement 0,05%. D'excellents résultats ont en particulier été obtenus pour une teneur en Fe de 0,02 à 0,07 % en poids et/ ou une teneur en Si de 0,02 à 0,05% en poids. Le produit corroyé en alliage d'aluminium peut également comprendre du Zn dans une teneur, en % en poids, inférieure ou égale à 0,4%, préférentiellement de 0,2 à 0,4%. La présence de Zn dans une teneur limitée a donné d'excellents résultats en termes de combinaison de propriétés de densité et de résistance à la corrosion notamment.

Selon un mode de réalisation, le produit corroyé en alliage d'aluminium comprend du Ti dans une teneur, en % en poids, inférieure ou égale à 0,15, préférentiellement inférieure ou égale à 0,05, plus préférentiellement de 0,005 à 0,04%, et plus préférentiellement encore de 0,01 à 0,03% de Ti. La présence de Ti dans une telle teneur spécifique permet le contrôle de taille de grains lors de la coulée de l'alliage.

Le produit corroyé en alliage d'aluminium peut également comprendre au moins un élément choisi parmi :

erbium, ytterbium, gadolinium, yttrium, hafnium et niobium, la teneur totale de ce ou ces éléments, en % en poids, étant inférieure ou égale à 0,2, préférentiellement de 0,05 à 0,2. La présence de l'un au moins de ces éléments permet de renforce l'effet du Li en présence de Zr pour la formation de dispersoïdes $Al_3(Zr,Li)$ de structure cristallographique $L1_2$.

Le produit en alliage d'aluminium selon l'invention peut en outre comprendre jusqu'à 0,05% en poids chacun et jusqu'à 0,15% en poids en association d'autres éléments, ajoutés volontairement ou non.

Certains éléments peuvent être néfastes pour les alliages Al-Mg-Li-Zr tels que précédemment décrits, en particulier pour des raisons de transformation de l'alliage telles que la toxicité et/ou les casses lors de la déformation. Il est donc préférable de limiter ces éléments à un niveau très faible, i.e. inférieur ou égal à 0,05 % en poids ou même moins. Dans un mode de réalisation avantageux, les produits selon l'invention ont une teneur maximale de 10 ppm de Na, préférentiellement de 8 ppm de Na, et/ou une teneur maximale de 20 ppm de Ca.

Le produit corroyé en alliage d'aluminium selon l'invention est en particulier apte à être traité thermique ou thermomécanique à une température comprise entre 250 et 350°C, préférentiellement entre 275 et 325°C, préférentiellement pendant une durée de 30 min à 4h, plus préférentiellement de 1h à 3h, tout en conservant, à mi-épaisseur, pour une épaisseur de 0,5 et 20mm, une microstructure essentiellement non-recristallisée.

Ledit produit corroyé présente en outre une dureté HV telle que λ < 0,4, préférentiellement < 0,3 et, plus préférentiellement encore < 0,25.

Le procédé de fabrication des produits selon l'invention comprend les étapes successives d'élaboration d'un bain de métal liquide de façon à obtenir un alliage Al-Mg-Li-Zr selon la composition particulière de la présente invention ; la coulée dudit alliage sous forme brute ; optionnellement l'homogénéisation de la forme brute; la déformation à chaud de la forme brute à une température de fin de déformation supérieure à 250°C, préférentiellement comprise entre 250 et 350°C ; le traitement thermique ou thermomécanique de la forme brute déformée à chaud à une température comprise entre 250 et 350°C, préférentiellement entre 275 et 325°C.

Le procédé de fabrication consiste donc tout d'abord à la coulée d'une forme brute en alliage Al-Mg-Li-Zr de composition, en % en poids : Mg : 4,0-5,5 ; Li: 0,4 - 0,7; Mn : 0,5-0,9 ; Zr : 0,08-0,15 ; Si : ≤ 0,2 ; Fe : ≤ 0,25 ; Zn : ≤ 0,4 ; Sc : ≤ 0,4 ; Ti : ≤ 0,15 ; Er, Yb, Gd, Y, Hf et/ou Nb : ≤ 0,2 ; autres éléments ≤ 0,05 chacun et ≤ 0,15 en association ; autres éléments ≤ 0,05 chacun et ≤ 0,15 en association ; reste aluminium. Un bain de métal liquide est donc réalisé puis coulé sous forme brute, typiquement une plaque de laminage, une billette de filage ou une ébauche de forge. Préférentiellement, le bain de métal liquide est coulé sous forme d'une plaque de laminage.

Suite à l'étape de coulée de la forme brute, le procédé de fabrication comprend optionnellement une étape d'homogénéisation de la forme brute. Préférentiellement, le produit est réchauffé entre 450 et 550°C avant la déformation à chaud.

La forme brute est ensuite déformée à chaud, typiquement par filage, laminage et/ou forgeage, pour obtenir un produit déformé. La déformation à chaud est effectuée à une température de fin de déformation supérieure à 250°C, préférentiellement comprise entre 250 et 350°C. Typiquement, de telles températures de fin de déformation correspondent à des températures d'entrée dans le laminoir d'environ 500°C. Selon un mode de réalisation avantageux, la déformation à chaud est une déformation par laminage de la forme brute.

Le produit déformé à chaud est soumis à un traitement thermique ou thermomécanique à une température comprise entre 250 et 350°C, préférentiellement entre 275 et 325°C et ceci préférentiellement pendant une durée de 30 min à 4h, plus préférentiellement de 1h à 3h. Ce traitement peut être un traitement thermique permettant une désensibilisation du produit à la corrosion ou un traitement thermomécanique permettant la mise en forme à chaud dudit produit, typiquement sa mise en forme à chaud par fluage, et éventuellement la désensibilisation à la corrosion dudit produit. Selon un mode de réalisation préféré, le procédé selon l'invention est exempt de toute étape de déformation à froid induisant une déformation plastique à froid cumulée supérieure ou égale à 2%, préférentiellement supérieure ou égale à 1%. Les présents inventeurs ont mis en évidence un effet néfaste d'une telle étape de déformation à froid sur la résistance à la recristallisation précédemment décrite pour le produit objet de la présente invention.

Les produits corroyés selon l'invention sont préférentiellement des produits filés tels que des profilés, des produits laminés tels que des tôles ou des tôles épaisses et/ou des produits forgés. Préférentiellement, les produits corroyés selon l'invention sont des tôles.

Avantageusement, et notamment pour les tôles de fuselage, les produits corroyés selon l'invention ont une épaisseur de 0,5 à 30 mm, préférentiellement de 0,5 à 20 mm, plus préférentiellement de 0,5 à 15 mm et, plus préférentiellement encore de 2 à 8 mm.

Le procédé précédemment décrit permet l'obtention de produits corroyés ayant, à mi-épaisseur, pour une épaisseur telle que décrite ci-dessus, une microstructure essentiellement non- recristallisée. Lesdits produits corroyés présentent en outre une dureté HV telle que λ < 0,4, préférentiellement < 0,3 et, plus préférentiellement encore < 0,25.

Les produits corroyés selon l'invention sont avantageusement utilisés pour réaliser un élément de structure d'aéronef, préférentiellement une peau de fuselage.

Les produits et procédés selon l'invention permettent en particulier l'obtention d'éléments de structure d'aéronefs en alliage d'aluminium de composition, en % en poids, Mg : 4,0-5,5 ; Li: 0,4 - 0,7; Mn : 0,5-0,9 ; Zr : 0,08-0,15 ; Si :

≤ 0,2 ; Fe : ≤ 0,25 ; Zn : ≤ 0,4 ; Sc : ≤ 0,4 ; Ti : ≤ 0,15 ; Er, Yb, Gd, Y, Hf et/ou Nb : ≤ 0,2 ; autres éléments ≤ 0,05 chacun et ≤ 0,15 en association ; reste aluminium ; ayant subi un traitement thermique ou un traitement thermomécanique à une température comprise entre 250 et 350°C et ayant, à mi-épaisseur, pour une épaisseur de 0,5 et 30 mm, une microstructure essentiellement non-recristallisée.

**Exemple**

Plusieurs formes brutes en alliage Al-Mg-Zr dont la composition est donnée dans le tableau 1 ont été coulées. L'alliage C présente une composition selon l'invention. La densité des alliages a été calculée en conformité avec la procédure de The Aluminium Association décrite en pages 2-12 et 2-13 de « Aluminum Standards and Data ».

Tableau 1 : Composition en % en poids et densité des alliages Al-Mg-Zr utilisés

| Alliage | Si | Fe | Cu | Mn | Mg | Zn | Ti | Zr | Li | Densité |
|---------|------|------|-------|------|------|------|------|------|------|---------|
| A | 0.04 | 0.06 | <0.01 | 0.78 | 5.40 | 0.32 | 0.02 | 0.14 | <0.1 | 2.65 |
| B | 0.04 | 0.06 | <0.01 | 0.78 | 4.98 | 0.30 | 0.02 | 0.13 | 0.25 | 2.63 |
| C | 0.03 | 0.07 | <0.01 | 0.73 | 4.97 | 0.30 | 0.02 | 0.12 | 0.57 | 2.61 |

Des lingotins (180x30x262mm) ont été coulés sous atmosphère inerte. Ils ont subi une étape de traitement thermique de 12h à 510-530°C. Des échantillons de 12 mm d'épaisseur prélevés dans ces lingotins ont été déformés à chaud en compression plane à 270-290°C et jusqu'à une épaisseur de 3 mm à l'aide d'une machine de type « Servotest » ®. La moitié des échantillons a finalement été soumise à un traitement thermique d'environ 1h à 300 ± 3°C ou d'environ 1h à 400 ± 3°C, ce traitement thermique étant représentatif d'une étape de mise en forme à chaud tel qu'une étape de « creep-forming » utilisée pour la mise en forme de panneaux double courbure des panneaux de fuselage utilisés dans le domaine de l'aéronautique.

La dureté Vickers a également été mesurée pour les alliages et conditions précédemment décrits (plan LxLT, après usinage d'1/10eme de l'épaisseur de l'échantillon, charge de 20 kg). Les mesures de dureté obtenues, réalisées selon la norme NF EN ISO 6507-1 (mars 2006), sont présentées dans le tableau 2.

Le paramètre λ, représentant la perte de dureté associée à un traitement thermique, est défini comme suit :

$$\lambda = \frac{HV_{tel\ que\ déformé} - HV}{HV_{tel\ que\ déformé} - HV_{reX}}$$

avec $HV_{tel\ que\ déformé}$ : dureté initiale après déformation à chaud ;
$HV_{reX}$ : dureté correspondant à l'état recristallisé (ici après 1h à 400°C) ;
$HV$ : dureté de l'échantillon.

Les valeurs du paramètre λ sont présentées dans le tableau 2.

Tableau 2 : Dureté Vickers (plan LxLT, t/10) des échantillons, évaluée selon la norme NF EN ISO 6507-1 (mars 2006), et paramètre λ, représentant la perte de dureté associée à un traitement thermique,

| Alliage | | Dureté ($HV_{20}$) | λ |
|---------|-----------------|---------|------|
| A | tel que déformé | 97 | 0 |
| | +1h 300°C | 89 | 0,55 |
| | +1h 400°C | 82 | 1 |
| B | tel que déformé | 101 | 0 |
| | +1h 300°C | 92 | 0,52 |
| | +1h 400°C | 84 | 1 |
| C | tel que déformé | 101 | 0 |
| | +1h 300°C | 98 | 0,21 |
| | +1h 400°C | 86 | 1 |

Après un traitement thermique d'une heure à environ 300°C, l'alliage C présente une dureté Vickers sensiblement identique à celle directement mesurée après déformation à chaud (-3 $HV_{20}$) tandis que les alliages A et B présentent une diminution de dureté de respectivement 8 et 9 $HV_{20}$. La perte de dureté (paramètre $\lambda$) associée à un traitement thermique d'une heure à environ 300°C est donc de 55 et 52% pour les alliages A et B respectivement, et de 21% pour l'alliage C. Contrairement aux alliages A et B, l'alliage C ne présente donc pas de recristallisation après un traitement thermique d'une heure à environ 300°C car $\lambda < 0.4$ (la perte de dureté observée est uniquement associée à de la restauration).

La microstructure (structure des grains) des échantillons a été observée après une attaque métallographique de type oxydation anodique et sous lumière polarisée. Trois états ont été observés :

- « tel que déformé » : microstructure observée directement après l'étape de déformation à chaud ;
- « + 1h 300°C » : microstructure observée après un traitement thermique de 1h à 300°C.
- « + 1h 400°C » : microstructure observée après un traitement thermique de 1h à 400°C.

Une évaluation qualitative de la microstructure a été réalisée :

_ le terme « essentiellement non-recristallisé » est utilisé lorsque la structure granulaire ne présente pas ou peu de grains recristallisés, typiquement moins de 20%, préférentiellement moins de 15% et plus préférentiellement encore moins de 10% des grains sont recristallisés (la figure 1 est une micrographie représentative de cette microstructure dite « essentiellement non-recristallisée ») ;
_ le terme « recristallisé » est utilisé lorsque la structure granulaire présente une proportion importante de grains recristallisés, typiquement plus de 50%, préférentiellement plus de 60% et plus préférentiellement encore plus de 80% des grains sont recristallisés (la figure 2 est une photographie représentative de cette microstructure dite « recristallisée ») ;
_ le terme « partiellement recristallisé » est utilisé lorsque la structure granulaire est intermédiaire entre les deux précédentes (la figure 1 est une photographie représentative de cette microstructure dite « partiellement recristallisée »).

Le tableau 3 présente les résultats des observations microstructurales des échantillons de composition A, B ou C, et la figure 1 présente des photographies représentatives des différents cas observés.

Tableau 3 : Microstructure (plan LxTC, à mi-épaisseur) des lingotins

| Alliage | | Microstructure |
|---------|--------------------|-------------------------------------|
| A | tel que déformé | essentiellement non-recristallisée |
| | +1h 300°C | recristallisée |
| | +1h 400°C | recristallisée |
| B | tel que déformé | essentiellement non-recristallisée |
| | +1h 300°C | partiellement recristallisée |
| | +1h 400°C | recristallisée |
| C | tel que déformé | essentiellement non-recristallisée |
| | +1h 300°C | essentiellement non-recristallisée |
| | +1h 400°C | recristallisée |

L'alliage C selon l'invention présente une excellente résistance à la recristallisation après un traitement thermique d'une heure à environ 300°C.

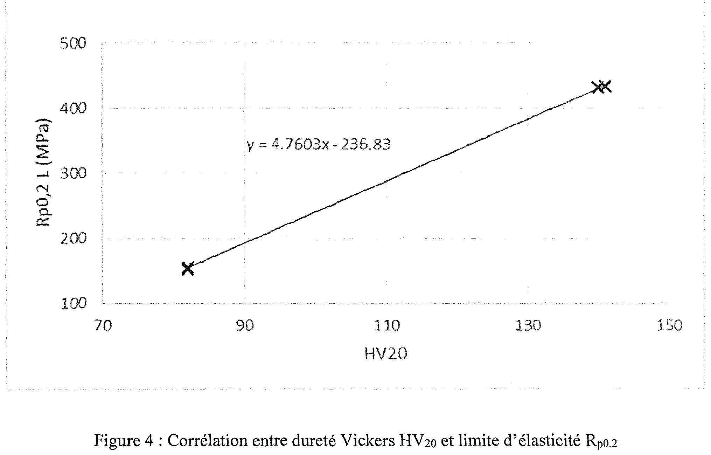

Les inventeurs ont par ailleurs déterminé expérimentalement une corrélation entre les mesures de dureté et la limite d'élasticité ($R_{p0.2}$) pour ce type de produit en se basant sur des essais complémentaires comprenant des échantillons laminés à froid après déformation à chaud. Ceci permet d'étendre le domaine de dureté et donc de limite d'élasticité afin de donner une meilleure représentativité à la corrélation. La figure 4 illustre cette corrélation. Un $R_{p0.2}$ calculé en se basant sur cette corrélation est donc également présenté dans le tableau 2.

Les présents inventeurs pensent qu'une réduction d'épaisseur industrielle par corroyage d'un facteur 50 à 100 aurait donné des $R_{p0,2}$ plus élevés que dans le cas en laboratoire du présent exemple pour lequel la réduction était d'un facteur 4.

Tableau 3 : Dureté Vickers (plan LxLT, t/10) des échantillons, évaluée selon la norme NF EN ISO 6507-1 (mars 2006), et $R_{p0.2}$ calculé (MPa)

| Alliage | | Dureté ($HV_{20}$) | $R_{p0,2}$ calculé (MPa) |
|---|---|---|---|
| A | tel que déformé | 97 | 226 |
| | +1h 300°C | 89 | 186 |
| | +1h 400°C | 82 | 153 |
| B | tel que déformé | 101 | 246 |
| | +1h 300°C | 92 | 203 |
| | +1h 400°C | 84 | 162 |
| C | tel que déformé | 101 | 243 |
| | +1h 300°C | 98 | 229 |
| | +1h 400°C | 86 | 175 |

Les alliages A et B présentent une baisse de Rp0.2 calculé de 40 et 43MPa respectivement après un traitement thermique d'une heure à environ 300°C, alors que l'alliage C présente une perte de 14 MPa.

**Revendications**

1. Produit corroyé en alliage d'aluminium de composition, en % en poids,
   Mg : 4,0-5,5 ;
   Li: 0,4-0,7;
   Mn : 0,5-0,9 ;
   Zr : 0,08-0,15 ;
   Si : ≤ 0,2 ;
   Fe : ≤ 0,25 ;
   Zn : ≤ 0,4 ;
   Sc : ≤ 0,4 ;
   Ti: ≤ 0,15 ;
   Er, Yb, Gd, Y, Hf et/ou Nb : ≤ 0,2 ;
   autres éléments ≤ 0,05 chacun et ≤ 0,15 en association ; reste aluminium.

2. Produit corroyé selon la revendication 1 **caractérisé en ce qu'**il comprend, en % en poids, 4,4-5,3 ; préférentiellement 4,8 - 5,2 de Mg.

3. Produit corroyé selon la revendication 1 ou 2 **caractérisé en ce qu'**il comprend, en % en poids, 0,4-0,6 de Li.

4. Produit corroyé selon l'une quelconque des revendications 1 à 3 **caractérisé en ce qu'**il comprend, en % en poids, 0,6-0,9 de Mn.

5. Produit corroyé selon l'une quelconque des revendications 1 à 4 **caractérisé en ce qu'**il comprend, en % en poids, ≤ 0,05, préférentiellement de 0,005 à 0,04, et plus préférentiellement encore de 0,01 à 0,03 de Ti.

6. Produit corroyé selon l'une quelconque des revendications 1 à 5 ayant une épaisseur de 0,5 et 30 mm, préférentiellement de 2 à 8 mm.

7. Produit corroyé selon l'une quelconque des revendications 1 à 6, ayant à mi-épaisseur, pour une épaisseur de 0,5 et 30 mm, une microstructure essentiellement non recristallisée.

8. Produit corroyé selon l'une quelconque des revendications 1 à 7, présentant une dureté HV telle que λ < 0,4, préférentiellement < 0,3 et, plus préférentiellement encore < 0,25.

**9.** Procédé de fabrication d'un produit corroyé en alliage d'aluminium comprenant les étapes successives :

a) coulée d'une forme brute en alliage d'aluminium de composition, en % en poids,
Mg : 4,0-5,5 ;
Li: 0,4- 0,7;
Mn : 0,5-0,9 ;
Zr : 0,08-0,15 ;
Si : $\leq 0,2$ ;
Fe : $\leq 0,25$ ;
Zn : $\leq 0,4$ ;
Sc : $\leq 0,4$ ;
Ti: $\leq 0,15$ ;
Er, Yb, Gd, Y, Hf et/ou Nb : $\leq 0,2$ ;
autres éléments $\leq 0,05$ chacun et $\leq 0,15$ en association ; reste aluminium ;
b) optionnellement, homogénéisation ;
c) déformation à chaud de la forme brute à une température de fin de déformation supérieure à 250°C, préférentiellement comprise entre 250 et 350°C ;
d) traitement thermique ou thermomécanique à une température comprise entre 250 et 350°C, préférentiellement entre 275 et 325°C.

**10.** Procédé selon la revendication 9 exempt de toute étape de déformation à froid induisant une déformation plastique à froid cumulée supérieure ou égale à 2%.

**11.** Utilisation d'un produit corroyé selon l'une quelconques des revendications 1 à 8 ou obtenu selon l'une quelconque des revendications 9 à 10, pour réaliser un élément de structure d'aéronef, préférentiellement une peau de fuselage.

**12.** Elément de structure d'aéronefs en alliage d'aluminium de composition, en % en poids, Mg : 4,0-5,5 ; Li: 0,4 - 0,7; Mn : 0,5-0,9 ; Zr : 0,08-0,15 ; Si : $\leq 0,2$ ; Fe : $\leq 0,25$ ; Zn : $\leq 0,4$ ; Sc : $\leq 0,4$ ; Ti : $\leq 0,15$ ; Er, Yb, Gd, Y, Hf et/ou Nb : $\leq 0,2$ ; autres éléments $\leq 0,05$ chacun et $\leq 0,15$ en association ; reste aluminium ; ayant subi un traitement thermique ou un traitement thermomécanique à une température comprise entre 250 et 350°C et ayant, à mi-épaisseur, pour une épaisseur de 0,5 et 20 mm, une microstructure essentiellement non-recristallisée.

**Patentansprüche**

**1.** Kneterzeugnis aus einer Aluminiumlegierung mit der Zusammensetzung, in Gew.-%:

Mg: 4,0-5,5;
Li: 0,4-0,7;
Mn: 0,5-0,9;
Zr: 0,08-0,15;
Si: $\leq 0,2$;
Fe: $\leq 0,25$;
Zn: $\leq 0,4$;
Sc: $\leq 0,4$;
Ti: $\leq 0,15$;
Er, Yb, Gd, Y, Hf und/oder Nb: $\leq 0,2$;
weitere Elemente jeweils $\leq 0,05$ und zusammen $\leq 0,15$; Rest Aluminium.

**2.** Kneterzeugnis nach Anspruch 1, **dadurch gekennzeichnet, dass** es, in Gew.-%, 4,4-5,3; vorzugsweise 4,8-5,2 Mg aufweist.

**3.** Kneterzeugnis nach Anspruch 1 oder 2, **dadurch gekennzeichnet, dass** es, in Gew.-%, 0,4-0,6 Li aufweist.

**4.** Kneterzeugnis nach irgendeinem der Ansprüche 1 bis 3, **dadurch gekennzeichnet, dass** es, in Gew.-%, 0,6-0,9 Mn aufweist.

**5.** Kneterzeugnis nach irgendeinem der Ansprüche 1 bis 4, **dadurch gekennzeichnet, dass** es, in Gew.-%, $\leq 0,05$,

vorzugsweise 0,005 bis 0,04, und besonders bevorzugt 0,01 bis 0,03 Ti aufweist.

6. Kneterzeugnis nach irgendeinem der Ansprüche 1 bis 5 mit einer Dicke von 0,5 und 30 mm, vorzugsweise 2 bis 8 mm.

7. Kneterzeugnis nach irgendeinem der Ansprüche 1 bis 6, das in halber Dicke, bei einer Dicke von 0,5 und 30 mm, ein im Wesentlichen nicht rekristallisiertes Mikrogefüge aufweist.

8. Kneterzeugnis nach irgendeinem der Ansprüche 1 bis 7, mit einer solchen Härte HV, dass $\lambda < 0,4$, vorzugsweise $< 0,3$ und besonders bevorzugt $< 0,25$.

9. Verfahren zur Herstellung eines Kneterzeugnisses aus einer Aluminiumlegierung, umfassend die folgenden Schritte:

    a) Gießen einer Rohform aus einer Aluminiumlegierung mit der Zusammensetzung, in Gew.-%:

        Mg: 4,0-5,5;
        Li: 0,4-0,7;
        Mn: 0,5-0,9;
        Zr: 0,08-0,15;
        Si: $\leq 0,2$;
        Fe: $\leq 0,25$;
        Zn: $\leq 0,4$;
        Sc: $\leq 0,4$;
        Ti: $\leq 0,15$;
        Er, Yb, Gd, Y, Hf und/oder Nb: $\leq 0,2$;
        weitere Elemente jeweils $\leq 0,05$ und zusammen $\leq 0,15$; Rest Aluminium;

    b) gegebenenfalls Homogenisieren;
    c) Warmumformen der Rohform bei einer Umformendtemperatur über 250°C, vorzugsweise zwischen 250 und 350°C;
    d) Wärme- oder thermomechanische Behandlung bei einer Temperatur zwischen 250 und 350°C, vorzugsweise zwischen 275 und 325°C.

10. Verfahren nach Anspruch 9, frei von jeglichem Kaltumformschritt, der eine kumulative plastische Kaltverformung von 2% oder mehr bewirkt.

11. Verwendung eines Kneterzeugnisses nach irgendeinem der Ansprüche 1 bis 8, oder gewonnen nach irgendeinem der Ansprüche 9 bis 10, zur Herstellung eines Luftfahrzeug-Strukturbauteils, vorzugsweise einer Rumpfhaut.

12. Luftfahrzeug-Strukturbauteil aus einer Aluminiumlegierung mit der Zusammensetzung, in Gew.-%: Mg: 4,0-5,5; Li: 0,4 - 0,7; Mn: 0,5-0,9; Zr: 0,08-0,15; Si: $\leq 0,2$; Fe: $\leq 0,25$; Zn: $\leq 0,4$; Sc: $\leq 0,4$; Ti: $\leq 0,15$; Er, Yb, Gd, Y, Hf und/oder Nb: $\leq 0,2$; weitere Elemente jeweils $\leq 0,05$ und zusammen $\leq 0,15$; Rest Aluminium; das bei einer Temperatur zwischen 250 und 350°C wärmebehandelt oder thermomechanisch behandelt wurde und in halber Dicke, bei einer Dicke von 0,5 und 20 mm, ein im Wesentlichen nicht rekristallisiertes Mikrogefüge aufweist.

## Claims

1. Wrought product made of an aluminium alloy having the composition, in wt%,
Mg: 4.0-5.5;
Li: 0.4-0.7;
Mn: 0.5-0.9;
Zr: 0.08-0.15;
Si: $\leq 0.2$;
Fe: $\leq 0.25$;
Zn: $\leq 0.4$;
Sc: $\leq 0.4$;
Ti: $\leq 0.15$;
Er, Yb, Gd, Y, Hf and/or Nb: $\leq 0.2$;

other elements ≤ 0.05 each and ≤ 0.15 combined, the remainder being aluminium.

2. Wrought product according to claim 1, **characterised in that** it comprises, in wt%, 4.4-5.3, preferentially 4.8-5.2 Mg.

3. Wrought product according to claim 1 or claim 2, **characterised in that** it comprises, in wt%, 0.4-0.6 Li.

4. Wrought product according to any of claims 1 to 3, **characterised in that** it comprises, in wt%, 0.6-0.9 Mn.

5. Wrought product according to any of claims 1 to 4, **characterised in that** it comprises, in wt%, ≤ 0.05, preferentially from 0.005 to 0.04, and more preferentially from 0.01 to 0.03 Ti.

6. Wrought product according to any of claims 1 to 5 having a thickness from 0.5 to 30 mm, preferentially from 2 to 8 mm.

7. Wrought product according to any of claims 1 to 6 having at mid-thickness, for a thickness from 0.5 to 30 mm, an appreciably non-recrystallised microstructure.

8. Wrought product according to any of claims 1 to 7, having a hardness HV such that λ < 0.4, preferentially < 0.3 and more preferentially < 0.25.

9. Method for producing a wrought product made of an aluminium alloy comprising the successive steps of:

   a) casting an unwrought product made of an aluminium alloy having the composition, in wt%,
   Mg: 4.0-5.5;
   Li: 0.4-0.7;
   Mn: 0.5-0.9;
   Zr: 0.08-0.15;
   Si: ≤ 0.2;
   Fe: ≤ 0.25;
   Zn: ≤ 0.4;
   Sc: ≤ 0.4;
   Ti: ≤ 0.15;
   Er, Yb, Gd, Y, Hf and/or Nb: ≤ 0.2;
   other elements ≤ 0.05 each and ≤ 0.15 combined, the remainder being aluminium;
   b) optional homogenisation;
   c) hot-working the unwrought product at a temperature at the end of deformation of greater than 250°C, and that preferentially lies in the range 250 to 350°C;
   d) heat treatment or thermomechanical treatment at a temperature that lies in the range 250 to 350°C, preferentially in the range 275 to 325°C.

10. Method according to claim 9, free from any cold-working step inducing an accumulated cold plastic deformation of greater than or equal to 2%.

11. Use of a wrought product according to any of claims 1 to 8, or obtained according to any of claims 9 to 10, to produce an aircraft structural element, preferentially a fuselage skin.

12. Aircraft structural element made of an aluminium alloy having the composition, in wt%, Mg: 4.0-5.5; Li: 0.4-0.7; Mn: 0.5-0.9; Zr: 0.08-0.15; Si: ≤ 0.2; Fe: ≤ 0.25; Zn: ≤ 0.4; Sc: ≤ 0.4; Ti: ≤ 0.15; Er, Yb, Gd, Y, Hf and/or Nb: ≤ 0.2; other elements ≤ 0.05 each and ≤ 0.15 combined, the remainder being aluminium, having undergone heat treatment or thermomechanical treatment at a temperature that lies in the range 250 to 350°C and having, at mid-thickness, for a thickness from 0.5 to 20 mm, an appreciably non-recrystallised microstructure.

Figure 1 : Micrographie représentative d'une microstructure dite « essentiellement non-recristallisée» (échantillon de l'alliage C observé après un traitement thermique de 1h à 300°C et une attaque de type oxydation anodique, plan LxTC à mi-épaisseur).

Figure 2 : Micrographie représentative d'une microstructure dite « partiellement recristallisée » (échantillon de l'alliage B observé après un traitement thermique de 1h à 300°C et une attaque de type oxydation anodique, plan LxTC à mi-épaisseur).

Figure 3 : Micrographie représentative d'une microstructure dite « recristallisée » (échantillon de l'alliage A observé après un traitement thermique de 1h à 300°C et une attaque de type oxydation anodique, plan LxTC à mi-épaisseur).

Figure 4 : Corrélation entre dureté Vickers $HV_{20}$ et limite d'élasticité $R_{p0.2}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120291925 A

**Littérature non-brevet citée dans la description**

- **R. DEVELAY.** *Traitements thermiques des alliages d'aluminium. Techniques de l'Ingénieur,* 1986, vol. M1290, 11
- Alloy production and materials manufacturing. **G. E. TOOTEN ; D. S. MACKENZIE.** Handbook of Aluminum. 2005, vol. 2, 202

- **R. DEVELAY.** Traitements thermiques des alliages d'aluminium. *Techniques de l'Ingénieur,* 1986, vol. M1290, 11